# EUROPEAN PATENT APPLICATION

(11) **EP 4 826 522 A1**
(43) Date of publication of application: **21.10.2026**
(21) Application number: 25170770.9
(22) Date of filing: 15.04.2025
(51) Int. Cl.: G06F 8/10, G06F 40/295, G06N 5/022, G06F 16/242

(54) **AN ENGINEERING DEVELOPMENT SYSTEM FOR UNAMBIGUOUSLY IDENTIFYING AN ENTITY WITHIN A KNOWLEDGE GRAPH OF INDUSTRIAL AUTOMATION COMPONENTS**

(71) Applicant: Siemens Aktiengesellschaft, 80333 München (DE)
(72) Inventor: Bandyopadhyay, Tathagata, 85591 Vaterstetten (DE); Thuluva, Aparna Saisree, 85764 Oberschleißheim (DE); Tüfek Özkaya, Nilay, 90403 Nürnberg (DE)
(74) Representative: Siemens Patent Attorneys

(57) **Abstract**

The proposed embodiments address an unambiguous identification of entities within a knowledge graph of industrial automation components in response to natural language queries. The system comprises a memory with application modules and a processor for executing these modules. The entity extraction module utilizes a large language model to process natural language queries and match them to normalized entity names. The entity linking module identifies and associates linked entities within the knowledge graph. The proposed embodiments allow developers to interact with the system using natural language, enhancing usability and efficiency through techniques such as prompt engineering.

## Description

### Technical Field

The disclosed embodiments pertain to the field of process automation, in particular to the field of process automation in industrial plants. More specifically, the disclosed embodiments relate to a development, composition, debugging, engineering and/or deployment of industrial automation programs such as industrial automation programs being designed to be deployed on industrial automation devices.

### Background Art

A factory shop floor typically comprises various industrial automation machines working together to achieve a common goal, such as manufacturing a product. Each machine may consist of multiple automation devices connected to a control system. Control systems may be utilized to provision an automation program defining the performance of the machine or device, collectively referred to as automation devices.

Depending on the type of control system, traditional automation programming languages or higher-level programming languages and frameworks may be utilized by process engineers. Process engineers specialize in developing specific automation programs to meet the requirements and specifications of the assigned device and to harmonize its operation with other devices, integrating their operation into the overall manufacturing process. However, process engineers are not typically experts in information modeling, which involves creating and utilizing a structured representation of data and methods associated with a device or system using semantic descriptions. The control system may expose a server implemented within the automation device, or within components of the automation device collectively referred to as industrial automation components, to one or more clients, thereby enabling these clients to connect and interact with the server.

For interaction, clients typically utilize structured text sources to readily comprehend the data and methods provided by the automation device. This semantically described and structured interface is commonly referred to as an information model, or more specifically, an industrial knowledge graph. Other structured text sources may include databases, CSV files, RDF files, JSON, YAML, or log files. The primary purpose of such structured text is to ensure the information is machine-readable and machine processable. The knowledge graph may be maintained on the automation device and exposed to clients by the server of the device and/or by the automation program being executed on the control system.

Process engineers and application developers may use engineering development systems. An engineering development system is understood to be a comprehensive suite of tools that may facilitate the creation, testing, and deployment of industrial software. These tools may provide a structured environment where engineers may develop automation programs, simulate industrial processes, and ensure integration with various industrial automation devices. Additionally, these tools may allow engineers to simulate industrial processes and test automation programs in a virtual environment before deployment.

Although information models are in principle human-readable, they are not intuitive for humans to read and understand. A natural language interface over these sources can support humans in more effectively using the information. However, making such a natural language interface intuitive is challenging, as the information in structured sources is formatted in a very specific way that may not be intuitive to humans.

Even further, in machine processible structured text sources, the text / keywords such as entity names, relationships etc. are written in a very specific format e.g., camel casing, multiple words combined without whitespaces, using very specific keywords or underscores etc. For industrial workers and engineers, querying specific information, such as the exact coordinates of axes for robots operating in a plant, may be particularly challenging. The structured data containing these coordinates is often stored in formats optimized for machine processing rather than human readability. For example, the coordinates might be stored in a JSON file with keys like robot1_axisX, robot1_axisY, and robot1_axisZ, which are not immediately intuitive.

Accordingly, there is a need in the art for making a natural language interface over structured text source more intuitive to humans.

There is a need to develop a natural language interface for an engineering development system to allow application developers and industrial workers to precisely and unambiguously identify specific entities within a knowledge graph using natural language queries, without requiring knowledge of the semantic or structural details of the knowledge graph or semantic descriptions in general. The interface should enable engineers to derive specific entities from vague natural language queries and immediately reuse these entities, for example as pointers or references in a development or knowledge graph development within the engineering development system.

### Summary of the Invention

According to an embodiment, an engineering development system is provided, the engineering development system being embodied for unambiguously identifying an entity within a knowledge graph of industrial automation components in response to a natural language query comprises a memory having a plurality of application modules stored thereon and a processor for executing the application modules. The application modules include an entity extraction module and an entity linking module.

The entity extraction module includes a large language model configured to receive at least one prompt containing the natural language query describing the entity. It also receives at least one key entity list to match a normalized entity name to one or more keyword phrases describing the entity in the natural language query. Furthermore, the entity extraction module applies entity disambiguation to the key entity list to create a subset list of matched entities.

The entity linking module is configured to browse at least one of the normalized entity names from the subset list of matched entities within the knowledge graph to gather at least one linked entity referenced by the normalized entity name. It then associates the at least one linked entity with an identifier as associated within the knowledge graph and outputs the at least one linked entity for further use by the application modules.

The proposed engineering development system is designed to accurately assign entities within a knowledge graph in response to natural language queries. The system features an entity extraction module that uses a large language model to process natural language queries, match keywords to normalized entity names, and disambiguate entities. Additionally, the system provides an entity linking module capable of at browsing the knowledge graph to associate linked entities with their unique resource identifiers and outputs these entities for further use.

In addition to assigning entities within a knowledge graph, the proposed engineering development system is equally suitable and designed to assign entities within various structured text sources such as databases, CSV files, RDF files, JSON, YAML, or log files in response to natural language queries, so that the technical term »knowledge graph« may serve as a placeholder for the previously mentioned or unmentioned structured text sources regarding the evaluation of the technical scope of the embodiments.

According to an embodiment, the engineering development system may include an entity extraction module with means for extracting a normalized entity name from the knowledge graph and applying a text classification using the class semantics of the knowledge graph.

According to an embodiment, the engineering development system may include an identifier that is a unique resource identifier or URI.

According to an embodiment, the engineering development system may iteratively receive a plurality of natural language queries for iteratively describing the entity.

According to an embodiment, the engineering development system may include a code generator for compiling the automation program into an automation programming language representation, with the code generator further used for compiling the information model into an automation programming language representation.

According to an embodiment, the engineering development system may include an interface for transferring the automation programming language representation of the information model to an engineering portal.

### Brief Description of the Drawing

The objects as well as further advantages of the present invention will become more apparent and readily appreciated from the following description of the preferred embodiments, taken in conjunction with the accompanying drawing accompanying drawing of which:
- FIG. 1: illustrates a schematic diagram of functional units participating in an engineering support process according to an embodiment; and;
- Fig. 2: illustrates a structural diagram of parts of a sample knowledge graph.

### Description of Examples

At present it is challenging to accurately perform a contextual keyword match from natural language queries or NLQ to a structured text source using traditional keyword search or named entity recognition (NER) approaches. According to the embodiments a novel approach to address this problem using Large Language Models or LLMs is proposed.

An emergence of Large Language Models has introduced promising solutions to the limitations of traditional Named Entity Recognition and Disambiguation or NERD pipelines. LLMs require minimal manually annotated data, adapt to new classes without explicit training, and eliminate the need for manual feature engineering. Researchers have explored various methods to enhance NERD using LLMs. Despite these advancements, existing NERD approaches, whether traditional or LLM-based, are inefficient for the specific problem underlying the embodiments due to their reliance on class semantics. More specifically, the presently known methods may fail to map a text span to its normalized entity form within a structured text source without class semantics. To address this, the embodiments may include, among other things, an LLM-based mechanism that performs this mapping without explicit text classification. The proposed methods are adaptive to new entities, do not require predefined class semantics, are fully contextual to the structured text source, and robust to variations arising from synonyms.

The workflow may commence when an engineer or industrial worker submits a natural language query (NLQ) to the engineering development system. The system's objective is to respond to the NLQ using information provided in the form of structured text. For instance, the structured text source can be an industrial knowledge graph or a knowledge graph of industrial automation components. Without loss of generality, the remainder of this document will consider a knowledge graph or KG as the structured text source.

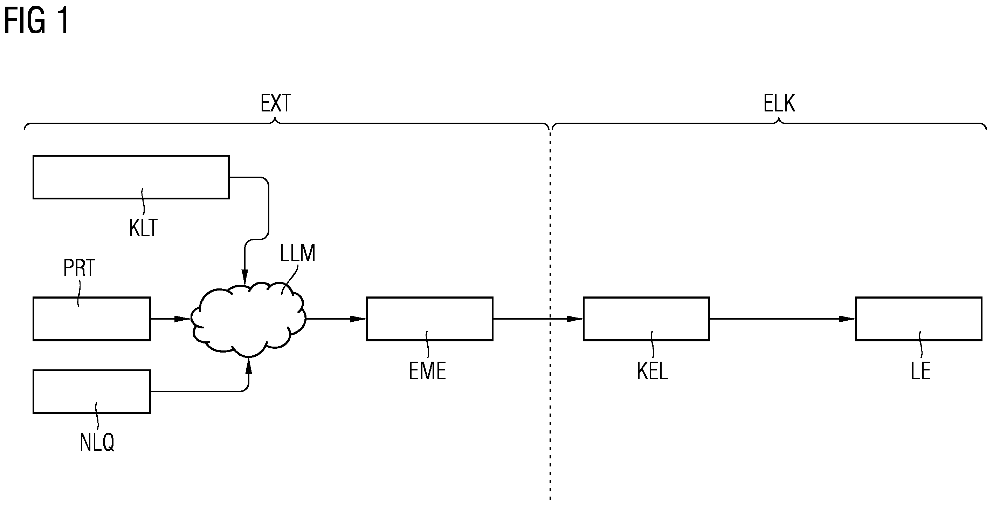

FIG. 1 illustrates a schematic diagram of functional units participating in an engineering development system according to an embodiment. A - not shown - developer, engineer or other industrial personnel may be in a process of amending or developing programming data structures and automation functions for - not shown - industrial automation components or devices. The engineer may concurrently develop an information model and/or vendor-specific add-ons based on this information model.

The engineering development system according to the embodiments may aid the developer in identifying an entity within information models, structured text or one or more knowledge graphs of industrial automation components in response to a natural language query. Identifying an entity within a knowledge graph of industrial automation components may involve returning a specific entity within a potentially complex code structure of the knowledge graph. This may allow the developer to work directly with the entity by reference, similar to a pointer in software engineering, or by using an identifier that is uniquely distinct within at least sections of the knowledge graph.

Engineering development processes according to the prior art are a highly tedious and error prone process, as an industrial engineer being a user of the engineering development system may typically be an expert in automation programming but not in information modelling. It may be very difficult for the engineer to understand and implement the information model and its inherent structure correctly. Moreover, the industrial engineer needs deep know-how about the information models of the standards, deep know-how about information modelling process, etc. Therefore, there is a skill gap that needs to be addressed, as the existing tools available are expert tools and there are no clear or intuitive guidelines for information modelling process. The embodiments presented herein allow the industrial engineer to navigate the complex structure through natural language inputs. This approach may ultimately produce a same or similar result as a formal query - such as a SPARQL query - by yielding a complete and formally structured result of a precisely defined query.

The result of a defined query not only returns an outcome, such as a numerical value for the requested number of axes of an industrial robot but also identifies the entity within the knowledge graph. This entity can then be referenced for further inquiries. Such additional queries may pertain to the material of the axes, the type of bearings used, etc. Furthermore, with knowledge of the entity in the knowledge graph, additional related information may be directly retrieved, such as contextual data like temperature, wear condition, and/or clearance between axes and bearings.

»In response to a natural language query« may mean an alternative way of interacting with the engineering development system. This may expand usual input methods, such as text based commands, graphical user interfaces providing visual tools and elements, such as buttons, icons, and menus, to facilitate interaction with the system, and/ or command-line interfaces. Using natural language may allow the developer to deviate from the otherwise strictly necessary vocabulary, grammar, semantics, or pragmatics when processing the knowledge graph, in favor of a colloquial verbal query. Such query - referred to as Natural Language Query or NLQ - input may also be further refined in a dialog format. This process may include techniques commonly known as prompt engineering.

An entity extraction module EXT of the engineering development system as shown in FIG.1 may include, use or result in, a key entity list KLT, a system prompt PRT, a natural language query NLQ, a large language model LLM, and a collection of extracted and matched entities EME, which will also be referred to as subset list of matched entities EME, as it may be seen as a subset of the key entity list KLT. An entity linking module ELK of the engineering development system as shown in FIG.1 may include, use or result in, a key entity definition lookup KEL and at least one linked entity LE.

In a possible initial step of the present embodiments, aimed at analyzing the natural language query NLQ and identifying and understanding the keywords within it, keywords may be extracted from the natural language query NLQ and matched against entities in the knowledge graph. This operation may, however, be challenging, as exact word-to-word matches may not exist. Consider the following example of a natural language query NLQ:
- What is the actual position of axes of all robots on the plant?

This question may be rephrased in the following ways:
- What are the current positions of the axes for all robots in the plant?
- Can you provide the real-time positions of the axes for every robot in the plant?
- What are the precise positions of the axes for all robots on the factory floor?
- What are the exact coordinates of the axes for all robots operating in the plant?
- What is the present positioning of the axes for all robots within the plant?
- The approach is presented step-by-step and explained using the example provided above.

According to a possible step, entities to be identified in the knowledge graph may be recognized in keyword phrases describing the entity in the natural language query NLQ. The keyword phrases from the example natural language query NLQ and alternative rephrased natural language queries NLQ are presented in the left column of an exemplary key entity list KLT depicted below:

| | |
|---|---|
| Keyword phrases from natural language query NLQ | Normalized entity name in the knowledge graph |
| actual position, current positions, real-time positions, precise positions, exact coordinates, present positioning | ActualPosition |
| axes, axis | Axes |
| Robot1, robot2, robot, robots | Robot |
| plant | Plant |

The key entity list KLT shows that a same keyword »actual position« may be rephrased in different ways such as: »current position«, »real-time position«, »precise position«, »exact coordinates«, »present positioning« etc. The normalized entity name in the knowledge graph is displayed in the right column of the exemplary key entity list KLT depicted above. All previously mentioned keywords may be traced back to the normalized entity name »ActualPosition« as utilized in the knowledge graph.

According to a possible further step, names of the entities may be extracted from the knowledge graph.

The entity extraction module EXT may include means for extracting normalized entity name from the knowledge graph, applying a text classification using class semantics of the knowledge graph.

The name of an entity may not necessarily be a unique identifier of one entity, as there may be a multiplicity of robots in a plant, each commonly referred to as »robot«. However, entity names of multiple robots may be uniformly referred to as »Robot« and not robot1, robot2 etc. This is one of the reasons why entity names are referred to as »normalized entity name« in the above shown table. The normalized entity names are used as a as an intermediate step to match one or more keyword phrases describing the entity in the natural language query NLQ, with the objective of ultimately identifying a unique entity within the knowledge graph. This step may be omitted when the normalized entities are already known.

The information source over which the natural language query NLQ should be answered is a structured text source, or more specifically, a knowledge graph.

The key entities may now be extracted from the knowledge graph against which the keywords from the natural language query NLQ may be matched. This may be a straightforward step as key entities may be extracted from any structured text source by parsing the text source or by executing a query on the text source. Key entities from a knowledge graph may be extracted even easier using a SPARQL (»SPARQL Protocol and RDF Query Language«) query as follows:

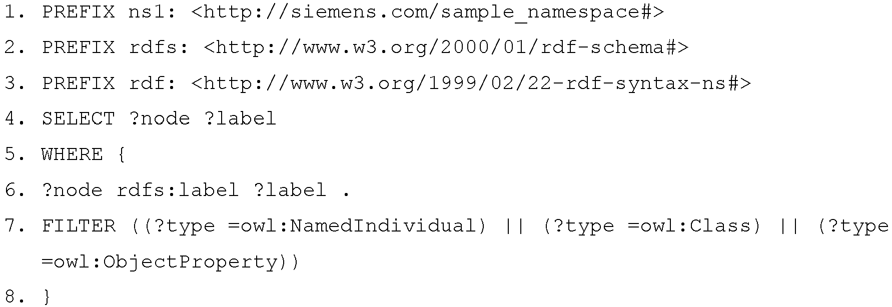

The entities extracted from the knowledge graph using the above query are presented in the right column entitled »Normalized entity name in the knowledge graph« of the table shown above. Simplicity and generic nature of the presented SPARQL query confer a substantial advantage.

According to a possible further step, an entity disambiguation may be applied to the entity list KLT in order to create a subset list of matched entities EME.

A keyword in natural language query NLQ may be rephrased in various ways, as demonstrated in the preceding steps. However, there may usually be only one key entity in the knowledge graph that corresponds to all these keywords. The corresponding knowledge graph entity in the previous example is: ActualPosition. That is, there exists an entity named ActualPosition in the knowledge graph.

One challenge is resolving the ambiguity between keywords in the natural language query NLQ and matching these keywords to key entities in the knowledge graph. The present embodiments propose a novel approach that leverages Large Language Models LLM through prompt engineering. Prompt engineering may be an effective way to give instructions to a Large Language Models LLM to perform a task desired by its user. Therefore, this step may also employ prompt engineering technique and provide a system prompt to the Large Language Models LLM in order to extract and disambiguate the keywords from the natural language query NLQ and match them to appropriate entities in the in the knowledge graph.

FIG. 1 illustrates the methodology wherein the natural language query NLQ, the key entity list KLT derived from the knowledge graph generated in one of the preceding steps, and the system prompt PRT - further detailed below - may be utilized as inputs to one ore more Large Language Models LLM. With these inputs, the Large Language Model LLM may perform one of the following steps:
- The Large Language Model LLM may extract the keywords from the natural language query NLQ.
- The Large Language Model LLM may match the extracted keywords to the key entities from the provided key entity list KLT.

The output of this step is the extracted and matches entities presented in the table above where the keywords from the natural language query NLQ are matched with corresponding key entities from the knowledge graph.

A possible system prompt PRT is presented below:
*Task: Identify and match the named entities from a prompt and given list You are an NLP expert who can identify the named entities from a prompt and match them against a given list of entities and create a subset list of the matched entities.*
*Note: Be as concise as possible.*
*Do not include any explanations or apologies in your responses*.
*Only produce the subset list of matched entities.*
*Only include the matched words present in the given list.*
*Do not include anything that is not present in the given list.*
*Ignore case or white space while matching the entities.*
*please consider any partial match as match.*
*Create a list of tuples of matched text and corresponding entities from the list.*
*The matched texts should be the exact substring how it is in the prompt.*
*The prompt is:*
   *{NLQ}*
   *and the list of entities is:*
   *{key_entity_list}*

According to a possible further step the identified entities may be linked to corresponding URIs from the knowledge graph or from the structured text source.

In the preceding step, one or more keywords extracted from the natural language query (NLQ) have been associated with a corresponding key entity within a knowledge graph, typically represented by a human-readable label of said entity. However, to obtain comprehensive information regarding the entity, including its attributes, relationships with other entities, data values, and methods, it may be insufficient to merely link the keywords from the NLQ to the knowledge graph entity labels. Consequently, this step involves linking the keywords to the unique resource identifier (URI) of the identified entity. This process is illustrated in the entity linking (ELK) section of FIG. 1.

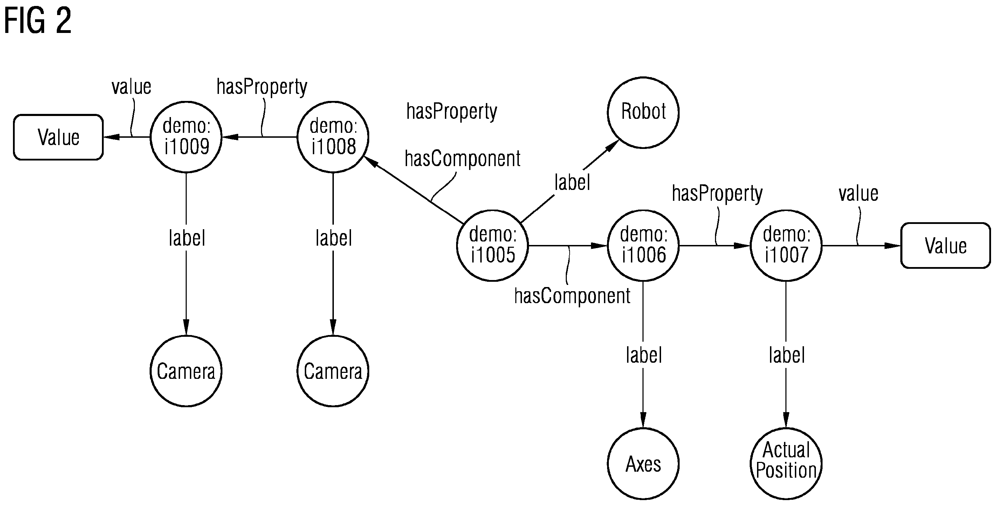

Figure 2, illustrating a structural diagram of a section of a sample knowledge graph, is utilized herein to elucidate an example. The keywords »Actual position« and »current coordinates« from the natural language query NLQ are to be linked to the knowledge graph entity »ActualPosition«. However, as illustrated in Figure 2, »ActualPosition« may merely serve as a label for the entity, whose unique resource identifier (URI) may be »demo:i1007« in this example. This entity possesses attributes such as label and value, and maintains relationships with other entities, such as the »hasProperty« relationship with »demo:i1006,« an Axes entity.

Therefore, linking the NLQ keywords to the corresponding URI facilitates the retrieval of all pertinent information about the entity from the structured text source. Consequently, in step 4, we perform this linking. This step is straightforward, as the URIs of the entities can be extracted from the structured text source by parsing it or executing a formal query. In the context of a knowledge graph, URIs can be extracted using a SPARQL query, similar to step 2. Subsequently, entity linking can be executed as a simple table lookup, as demonstrated in Table 2.

Therefore, the linking of the NLQ keywords to the corresponding URI may advantageously facilitate the retrieval of all pertinent information about the entity from the structured text source. Consequently, this linking is performed. This step may seem straightforward, as the URIs of the entities may be extracted from a structured text source by parsing the text source or executing a formal query. In the context of a knowledge graph, URIs may be extracted using a SPARQL query using a similar methodology as illustrated in the preceding steps. Subsequently, entity linking can be executed as a simple table lookup, as illustrated in the table below showing knowledge graph entities and their unique identifiers.

| Normalized entity name in the knowledge graph | URIs of entities in the knowledge graph |
|---|---|
| ActualPosition | "http://siemens.com/opcua/demo/instance#i6009" |
| Axes | "http://siemens.com/opcua/demo#i1003" |
| Robot | "http://siemens.com/opcua/demo#i1002" |
| Plant | "http://siemens.com/opcua/demo/i1000" |

This step enables several use cases, including sub-graph extraction, intuitive application development in low-code platforms (by generating graphical components from structured text sources), and/or generation of customized structured text based on a given structured text template.

For example, the natural language query (NLQ), the extracted keywords, and the matched entity links can be provided as input to a sub-graph extraction algorithm in order to utilize a graph traversal method for contextual sub-graph extraction from a knowledge graph for natural language-based interactive question answering. The sub-graph extraction algorithm may extract a context-aware sub-graph that may be supplied to a large language model LLM to generate an accurate response to a user's query.

The present embodiments provide a novel method to extract, disambiguate, and link entities from a natural language sentence or any other unstructured text to well-defined entities in a structured text source (e.g., databases, excel sheets, RDF, YAML, log files, etc.) using LLMs.

Even today, a natural language interface may be provided over a structured text source through large language models LLM, but the interface may lack intuitiveness. To formulate a natural language query NLQ, a user must possess knowledge of the terminology employed within the structured text source. This requirement restricts the utilization of structured text sources, even when a natural language interface is available. Only domain experts, who are familiar with the underlying sources, my effectively use such interfaces. In certain instances, even domain experts may encounter difficulties if the entity name serves merely as a label and not as its unique resource identifier, which may provide a definition and context-aware information about the entity. Under these circumstances, the generated response may be inaccurate or incomplete. Consequently, a user is expected to possess domain-specific knowledge to effectively utilize the natural language interface.

These limitations hinder the usage of structured text sources, thereby constraining business opportunities that rely on them. The proposed embodiments address these issues providing solutions to enhance the intuitiveness of the natural language interface over structured text sources, enabling usage by individuals beyond domain experts and to ensure the generation of accurate and complete responses to the user's natural language queries.

The above-mentioned benefits are achieved by the following features in these embodiments: Entity disambiguation with high variation: The present embodiments disambiguate the entities in a natural language query NLQ and dynamically match them to the entities from any structured text source or knowledge graph. Therefore, they can handle high variations of synonyms without the need to pre-define them, giving more flexibility to the user to formulate a natural language query NLQ.

The present embodiments are advantageously suitable to identify the context of the given structured text source and link the entities from the natural language query NLQ appropriately. Therefore, they can easily adapt to new knowledge domains as no domain-specific knowledge is needed except the normalized keyword list.

In existing NERD approaches, an entity in a natural language query NLQ is usually categorized and linked to a class to which it belongs. However, for these embodiments, it is not sufficient to link it to a class of entities. Accurate linking of the natural language query NLQ entities to entities from the structured text source is required instead. The present embodiments provide a novel solution to accurately match and link the entities.

The natural language query (NLQ) entities are advantageously not merely linked to the labels of the entities from the structured source, but to their URIs to provide context-aware information about an entity. This enables accurate query answering. Moreover, it enables other use cases such as sub-graph extraction, generation of new structured text, intuitive application development in low-code platforms, etc.

The system prompt provided by the present embodiments is configurable. A domain expert may advantageously configure it in a certain way to make the system more precise and less flexible as they have the knowledge about terminology in the underlying structured text source. On the other hand, it can be configured differently by non-domain experts to offer them flexibility to formulate their natural language query NLQ more intuitively.

In summary, the proposed embodiments address an unambiguous identification of entities within a knowledge graph of industrial automation components in response to natural language queries. The system comprises a memory with application modules and a processor for executing these modules. The entity extraction module utilizes a large language model to process natural language queries and match them to normalized entity names. The entity linking module identifies and associates linked entities within the knowledge graph. The proposed embodiments allow developers to interact with the system using natural language, enhancing usability and efficiency through techniques such as prompt engineering.

It is to be understood that the elements and features recited in the appended claims may be combined in different ways to produce new claims that likewise fall within the scope of the present invention. Thus, whereas the dependent claims appended below depend on only a single independent or dependent claim, it is to be understood that these dependent claims can, alternatively, be made to depend in the alternative from any preceding or following claim, whether independent or dependent, and that such new combinations are to be understood as forming a part of the present specification.

While the present invention has been described above by reference to various embodiments, it should be understood that many changes and modifications can be made to the described embodiments. It is therefore intended that the foregoing description be regarded as illustrative rather than limiting, and that it be understood that all equivalents and/or combinations of embodiments are intended to be included in this description.

## Claims

1. An engineering development system for unambiguously identifying an entity within a knowledge graph of industrial automation components in response to a natural language query, the engineering computing system comprising:
- a memory having a plurality of application modules stored thereon; and;
- a processor for executing the application modules, the application modules including:
- an entity extraction module (EXT) including a large language model (LLM) configured to:
- receive at least one prompt including the natural language query (NLQ) describing the entity,
- receive at least one key entity list (KLT) to match a normalized entity name to one or more keyword phrases describing the entity in the natural language query (NLQ),
- apply an entity disambiguation to the entity list (KLT) to create a subset list of matched entities (EME),
- an entity linking module (ELK) configured to:
- browse at least one of said normalized entity names from the subset list of matched entities (EME) within the knowledge graph to gather at least one linked entity (LE) referenced by said normalized entity name,
- associate the at least one linked entity (LE) with an identifier as associated within the knowledge graph, and,
- output the at least one linked entity (LE) for a further use by said application modules.

2. The engineering development system according to claim 1, the entity extraction module (EXT) including means for extracting normalized entity name from the knowledge graph, applying a text classification using class semantics of the knowledge graph.

3. The engineering development system according to one of the aforementioned claims, wherein the identifier is unique resource identifier.

4. The engineering development system according to one of the aforementioned claims, wherein a plurality of natural language queries (NLQ) is iteratively received for iteratively describing the entity.

5. The engineering development system according to claim 1, including a code generator for compiling the automation program into an automation programming language representation, the code generator further used for compiling the information model into an automation programming language representation.

6. The engineering development system according to the aforementioned claim 5, including an interface for transferring the automation programming language representation of the information model to an engineering portal.

7. A computer-implemented method for identifying an entity within a knowledge graph of industrial automation components in response to a natural language query, the method comprising:
- receiving, an entity extraction module (EXT), at least one prompt including the natural language query (NLQ) describing the entity;
- receiving, by the entity extraction module (EXT), at least one key entity list (KLT) to match a normalized entity name to one or more keyword phrases describing the entity in the natural language query (NLQ);
- applying, by the entity extraction module (EXT), entity disambiguation to the key entity list (KLT) to create a subset list of matched entities (EME);
- browsing, by an entity linking module (ELK), at least one of said normalized entity names from the subset list of matched entities (EME) within the knowledge graph to gather at least one linked entity (LE) referenced by said normalized entity name;
- associating, by the entity linking module (ELK), the at least one linked entity (LE) with an identifier as associated within the knowledge graph; and,
- outputting, by the entity linking module (ELK), the at least one linked entity (LE) for further use by application modules.
